# EUROPEAN PATENT SPECIFICATION

(11) **EP 1 640 640 B1**
(45) Date of publication and mention of the grant of the patent: **03.04.2013**
(21) Application number: 05014643.0
(22) Date of filing: 06.07.2005
(51) Int. Cl.: F16H 59/02

(54) **Actuating device for controlling a utility vehicle**
Schaltvorrichtung für ein Nutzkraftfahrzeug
Dispositif de passage de vitesses pour un véhicule utilitaire

(30) Priority: 28.09.2004 DE 102004047426
(43) Date of publication of application: 29.03.2006
(73) Proprietor: CLAAS Tractor SAS, 78141 Velizy-Villacoublay (FR)
(72) Inventor: Römer, Jens, 33332 Gütersloh (DE); Arrouart, Cyrillie, 92160 Antony (DE)
(74) Representative: Ellerbrächter, Dirk

(56) References cited:
- EP-A- 0 310 873
- EP-A- 0 688 978
- EP-A- 0 725 233
- DE-A1- 10 218 233
- DE-U1-202004 004 151
- US-B1- 6 474 186

## Description

The invention relates to a utility vehicle, according to the precharacterising part of claim 1.

From EP 0 310 873 A1, an actuating device for controlling utility vehicles is known, whose actuating element, which is a shift lever, is accommodated by a shift gate guide and which within said shift gate guide can be operated in two shift gate passages, arranged side by side. Each of the shift gate passages is associated with gearshift means which when activated control either a power shift transmission or an infinitely variable so-called continuously variable transmission (CVT). Movement of the shift lever within the first gearshift gate generates gearshift signals in a control unit, wherein said gearshift signals cause infinitely variable speed change in the continuously variable transmission. If the operator of the utility vehicle moves the shift lever from this first gearshift gate to the second gearshift gate, the shift lever activates gearshift action on a so-called power shift gear, wherein the shift lever has to be moved to defined gearshift positions. In this way it becomes possible with a single actuating element to control not only transmissions but also infinitely variable transmissions. Because the respectively required control means for the various types of transmissions are arranged separately, a position change of the shift lever requires very considerable design space because said shift lever has to be guided in the first and second shift gate passages. Furthermore, the shift gate guide and the separate allocation of gearshift means require an elaborate design and thus an expensive solution which is difficult to fit into existing operator consoles.

It is thus the object of the invention to propose an actuating device for controlling utility vehicles, which device avoids the described disadvantages of the state of the art and, in particular, makes it possible to bring about various gearshift operations by moving the actuating device in a way that saves design space.

According to the invention, this object is met by the characterising features of claim 1.

By designing the shift lever so that from a neutral position it can be swivelled into at least two operating regions, and by coupling gearshift procedures on the transmission, of which there is at least one, to the movement of the shift lever in each operating region, it is ensured that with a single shift lever a multitude of gearshift functions can be realised in a way that saves design space.

Clearly structured operation of the shift lever is ensured if the two operating regions, of which there at least two, define the step up region and the backspace region. This is in particular advantageous in that the shift lever for step up or backspace movement of the gear unit of the utility vehicle only needs to be moved within a small, space-saving swivel region.

A particularly compact design of the actuating device is achieved if the operating regions of the shift lever can be traversed solely by swivelling the shift lever within a single swivel plane.

In order to be able to achieve various gearshift procedures which, depending on the design of the transmission, may be achievable independently of each other, the operating regions are divided into first and second partial operating regions, wherein various gearshift functions can be activated in each partial operating region.

In an advantageous improvement of the invention the transmission is a power shift transmission, wherein the shift lever causes shifting of the power shift steps of the power shift transmission when it moves through a first partial operating region, and causes shifting of the gear ratio steps of the power shift transmission when it moves through a second partial operating region. In this way, the shifting options of a power shift transmission, which shifting options may be quite extensive, can be reduced to shift lever movement which is efficient and requires little actuation effort.

In order to prevent long actuation travel and optimally adapt actuation of the shift lever to the shift philosophy of a power shift transmission, the particular partial operating region in which shifting of the power shift steps takes place is directly adjacent to the neutral position of the shift lever.

Further optimisation of the gearshift procedures is achieved if the shift lever interacts with gearshift means in such a way that actuating the shift lever either carries out only one gearshift function or a multitude of gearshift functions.

In order to provide the operator of the utility vehicle with immediate information as to when s/he moves from one partial operating region to the next, when actuating the shift lever for shifting power shift transmissions, the shift lever must overcome resistance at the transition between the partial operating regions.

A particularly simple design for manual mode is achieved if shifting the power shift steps in the first partial operating region takes place by touching the resistance which forms the end stop of the first partial operating region. In contrast, a particularly simple design of the actuating device in automatic mode is achieved if shifting of the power shift steps in the first partial operating region takes place depending on the dwell time of the shift lever in this first partial operating region.

Analogously, a particularly simple design of operating the shift lever according to the invention is achieved in the second partial operating region which causes shifting of the gear-ratio steps, if in manual mode, again by touching an end stop, changing of the gear-ratio steps is achieved, while in automatic mode the gearshift procedures are again carried out depending on the dwell time of the shift lever in this partial operating region.

In an advantageous improvement of the invention, in automatic mode the shifting behaviour of the actuating device can in the simplest case be influenced in that the dwell time interval can be set.

In a way which is known per se, changing between automatic mode and manual mode can be achieved by preselection using a separate preselection switch.

Since as a rule, movement of the shift lever into the outermost partial operating region only takes place when a gear is changed, in an advantageous improvement of the invention a gear change can be caused as soon as the shift lever enters the outermost partial operating region. This provides the advantage in particular in that the swivel region of the shift lever and thus the space requirement can be further reduced.

Furthermore, there can be applications where shifting of power shift steps is not required. In order to prevent unnecessary triggering of gearshift procedures between the power shift steps of a gear in such situations, in an advantageous improvement of the invention a gearshift element is associated with the shift lever, which gearshift element makes it possible to disable the first partial operating regions.

A further reduction of the necessary swivel range of the shift lever results if each operating region comprises only one partial operating region, and furthermore if the gearshift function of the further partial operating region is caused by a shift element integrated in the shift lever. Since utility vehicles, in particular agricultural utility vehicles, are often operated in the same gear, but, depending on the tractive power required, in various power shift steps, due to less frequent gear-changing this function can be carried out by the shift control element integrated in the shift lever.

In order to inform the operator of the utility vehicle about the current gearshift state of the transmission, in an advantageous improvement of the invention, the following may be displayed: the partial operating region currently activated by the shift lever, and/or the transition from one partial operating region to the next, and/or the selected gears and power shift steps, and/or the forward/reverse motion position.

In order to prevent incorrect operation by unintended contacting of the shift lever and in order to always ensure safe return of the shift lever from the excursion position to the neutral position, in an advantageous embodiment of the invention, swivelling of the shift lever takes place against the action of a spring.

A particularly user-friendly design is achieved if the shift lever is directly integrated in the operator console of the utility vehicle.

A particularly simple design for the use of the shift lever in forward and reversing motion one gets, if it is provided a moving direction election element which is attached to the gearshift control system and/or the shift lever.

According to another aspect of the invention a height integration degree is achieved if the deflection of the shift lever chooses itself the moving direction.

Further advantageous embodiments are the subject of further subordinate claims and are described below by means of an embodiment shown in several figures as , follows:
- Figure 1: a diagrammatic representation of a utility vehicle with a shift lever according to the invention;
- Figure 2: a detailed illustration of a first embodiment of the shift lever according to the invention;
- Figure 3: a detailed illustration of a further embodiment of the shift lever according to the invention; and

- Figure 4: a detailed illustration of a further embodiment of the shift lever according to the invention.

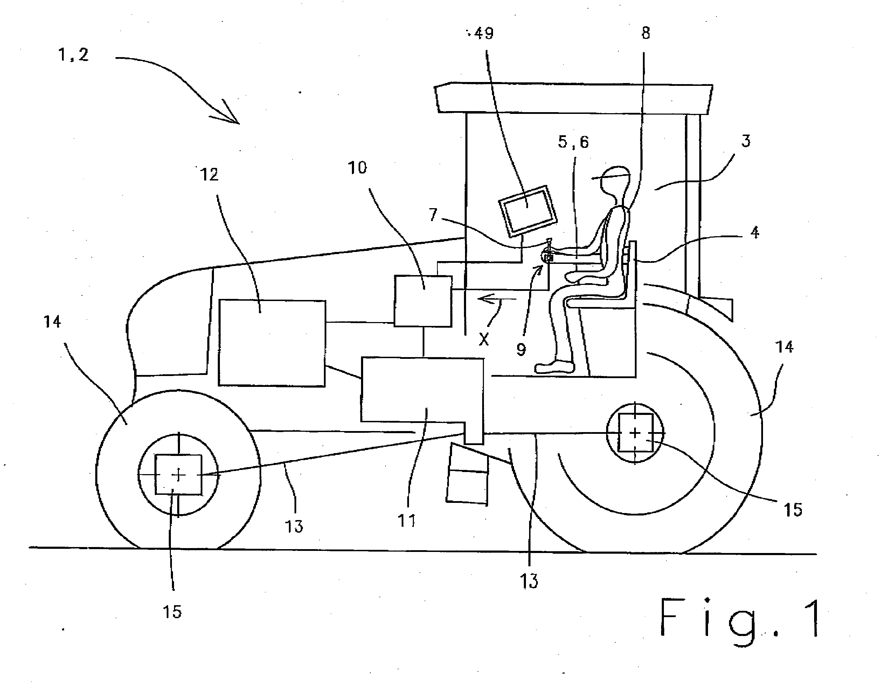

Figure 1 diagrammatically shows a utility vehicle 1 in the shape of a tractor 2. In a way which is known per se, the driver's cabin 3 of the tractor 2 comprises at least one driver's seat 4 whose position can be adjusted, with an armrest 6 in the shape of an operator console 5 on one side being associated with said driver's seat 4. Integrated in the front of the operator console 5 is the shift lever 7 according to the invention, which will be described in detail below, such that activation of said shift lever 7 by the operator 8 of the tractor 2 is possible from a comfortable seated position. On the underside and within the operator console 5, the shift lever 7- is in effective connection with so-called gearshift means 9, which are known per se, which generate gearshift signals X, which effective connection will be described in detail below, wherein said gearshift signals X by way of a signal-processing gearshift control system 10 directly trigger gearshift procedures in one of the transmissions 11 associated with the gearshift control system 10, wherein the transmission 11 on the drive side is connected to an engine 12, and on the power take-off side is connected by way of power transmission devices 13, which are known per se, to the axles 15 of the tractor 2, which axles accommodate the running wheels 14. Depending on the design, the gearshift means 9 which transmit the gearshift signals X from the shift lever 7 to the shift control system 10 can be electrical line connections or mechanical coupling links.

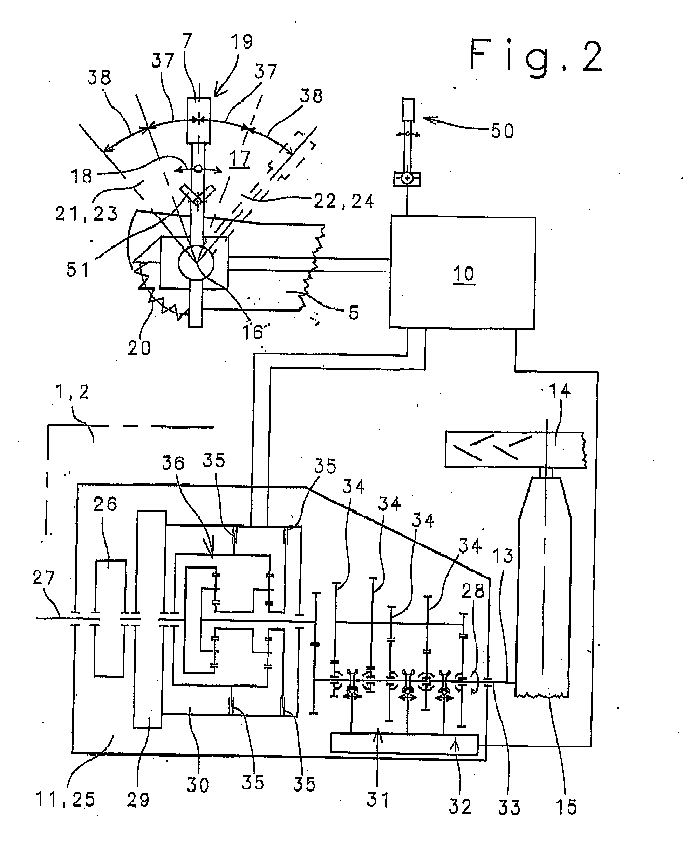

Figure 2 shows a detailed view of the shift lever 7 which has been integrated in the operator console 5.

From the neutral position 19 as shown, the shift lever 7 can be swivelled in a vertical plane 17 on a swivel axis 16 which extends across the operator console 5 according to the directional arrows 18 shown in the drawing, with such swivelling being either forward or reverse against the action of a spring element 20. According to the invention, the shift lever 7, when it is swivelled on its swivel axis 16, causes gearshift procedures (to be described in detail below) on the transmission 11 which is in effective connection with the shift lever 7 by way of the gearshift control system 10. The swivel region covered by the shift lever 7 during its movement from the neutral position 19 to the front represents a first operating region 21 of the transmission 11, while the swivel region from the neutral position 19 to the rear represents a second operating region 22 of the transmission 11. In the most basic arrangement, the forward operating region 21 represents the forward motion region 23, while the rearward operating region 22 represents the reversing region 24 of the tractor 2.

In the embodiment shown, the transmission 11 is a power shift transmission 25. By way of the transmission input shaft 27 which is connected to the main clutch 26, the drive power provided by the engine 12, by way of a reversing module 29 which defines the direction of rotation 28 of the power take-off, is transmitted to the power shift module 30 which can be shifted under load, and to a downstream gearbox 31 which can be shifted when not under load and which comprises an integrated so-called crawling speed gear step 32. By way of various power transfer means 13, the transmission output shaft 33 transmits the drive power to the respective vehicle axis 15 of the tractor 2. Depending on the design of the power shift module 30, as well as the downstream gearbox 31, the transmission 11 which is a power shift transmission 25 can be operated in any desired number of gear-ratio steps 34, and within the gear-ratio steps 34, depending on the selection of the respective coupling systems 35, can be operated in any desired number of power shift steps 36. In order to achieve the effects according to the invention, the specific design of the power shift transmissions 25, which is known per se, is only of importance to the extent that the power shift transmission 25 is in effective connection with at least one power shift module 30 and a gearbox 31 which can be shifted when not under load and which is in effective connection with said power shift module 30.

So that at least the power shift module 30 and the gearbox 31 of the power shift transmission 25 can be controlled by way of a single shift lever 7, the operating regions 21, 22 which the shift lever 7 can traverse are divided into first and second partial operating regions 37, 38 to achieve various gearshift functions on the power shift transmission 25, wherein in each instance the first partial operating regions 37 of the step up motion and backspace motion regions 23, 24 cause the power shift steps 36 and the respective second partial operating regions 38 to shift the gear-ratio steps 34 of the power shift transmission 25.

Since, during operation, in particular utility vehicles 1 that are designed as tractors 2 are often kept within a particular gear-ratio step 34 so as to avoid frequent gear changing, and regularly respond to changed needs in tractive power by shifting within the power shift steps 36 (and therefore shifting of the power shift steps 36 occurs more frequently), the partial operating region 37 which shifts the power shift steps 36 is directly adjacent to the neutral position 19 of the shift lever 7 to prevent long shift travel.

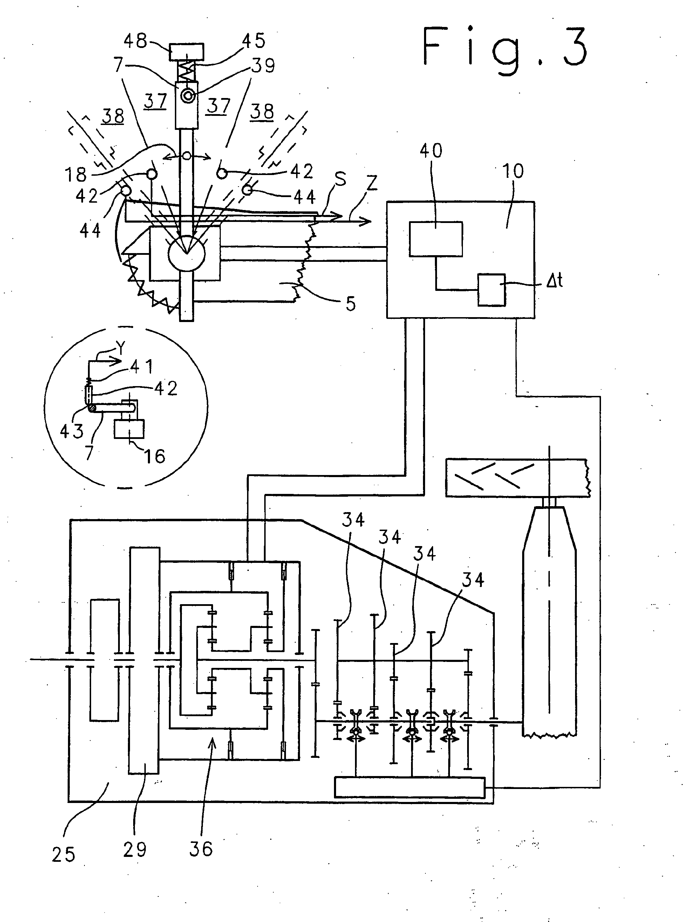

In an advantageous improvement of the invention, the shift lever 7 according to Figure 3 can be designed such that either manual shifting or automatic shifting of the gear-ratio steps 34 as well as of the gear-ratio steps 36 becomes possible. In the simplest case, the changeover from manual mode to automatic mode can be achieved in that the shift lever 7 is associated with a preselection switch 39 for selecting the mode which in the gearshift control system 10 activates the control algorithm stored for the respective operating mode, with said control algorithm 40 being described in more detail below.

For the operator 8 of the shift lever 7 to be informed as soon as the shift lever 7 during excursion changes from the first partial operating region 37 to the adjacent second partial operating region 38, in the transition area between the two regions the shift lever 7 is associated with an end stop 42 which can be slid against a spring 41. When the shift lever 7 is swivelled, the upper end of said end stop 42, which upper end may for example be dome-shaped, establishes contact with said shift lever 7 and can be moved against the resistance of the spring 41. Furthermore, the end stop 42 is associated with a contact switch 43 which when the shift lever 7 establishes contact in manual mode generates a gearshift signal Y which by way of the gearshift control system 10 triggers shifting to another power shift step 36. In the same way, the respective second partial operating range 38 in manual mode is also delimited by a limit switch 44 which generates gearshift signals Z, wherein the gearshift signals Z which have been generated by the limit switch 44 establishing contact with the shift lever 7, by way of the gearshift control system 10 trigger a change in the gear-ratio step 34 in the power shift transmission 25. By the operator 8 in each instance moving the shift lever 7 several times against the respective end stop 42, 44, in each instance gearshift signals Y, Z are generated which make it possible to effect repeated successive shifting in the gear-ratio steps 34 or in the power shift steps 36.

In contrast to this, if the shift lever 7 is operated in automatic mode, a preferred embodiment of the invention provides for shifting of the gear-ratio steps 34 or the power shift steps 36 to be effected depending on the dwell time of the shift lever 7 in the respective partial operating region 37, 38. In the simplest case, for this purpose a dwell time interval Δ t is defined in the gearshift control system 10, with a corresponding gearshift procedure being triggered after each dwell time interval Δt that has passed, wherein the dwell time interval Δt can be preset.

In addition, in order to further minimise the necessary swivel movement 18 of the shift lever 7, the gearshift control system 10 can be programmed such that as soon as the shift lever 7 has overcome the resistance defined by the respective front end stop 42, i.e. as soon as the shift lever 7 has passed the end stop 42, a gearshift signal Z for changing to another gear-ratio step 34 is generated.

Since in particular when travelling on roads, changing between the power shift steps 36 is regularly not required, but, instead, only changing between the gear-ratio steps is important, in an advantageous improvement of the invention, at the top of the shift lever 7 there is an associated shift element 46 which is switchable against the action of a spring element 45, wherein said shift element 46, when activated, generates a position signal S which in the gearshift control system 10 causes the first partial operating regions 37 to be disabled. In this way it becomes possible for the shift lever 7 to only cause a change in gear, not however a change between the power shift steps 36 of a gear 34.

In this connection it is also thinkable that it is stored a dwell time threshold Δts in the gear shift control system 10 which prevents the shifting of the power shift steps 36 as long as the dwell time interval of the shift lever 7 in which the shifting of the power shift steps 36 are realized is less than the stored dwell time threshold Δts.

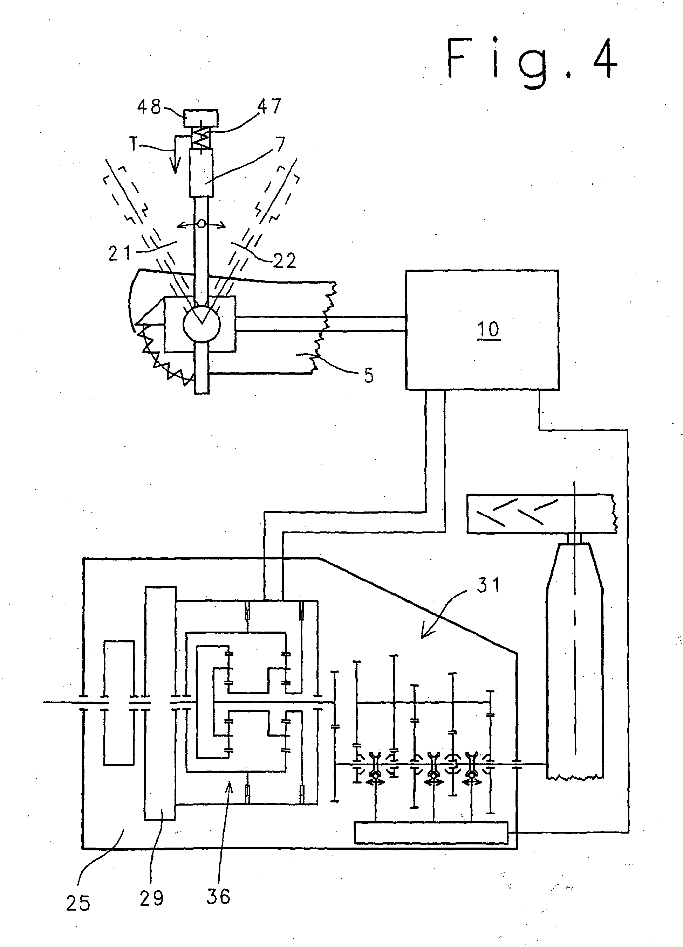

According to Figure 4, the shift lever 7 can also be designed such that it is only swivelled within first and second operating regions 21, 22, without these operating regions 21, 22 being divided into partial operating regions 37, 38 according to the explanations above. In this case, the shift lever 7 is associated with a switch 48, which can be activated against the action of a spring element 47, with said switch 48 assuming the function of one of the above-described partial operating regions 37, 38. Analogous to the above-described shift control element 46, the gearshift signal T, generated by the further switch 48, can also again be generated for shifting the gear-ratio steps 34. In that the shift lever 7, depending on the design, only serves in each instance to control one partial operating region 37, 38 within the step up motion region and the backspace motion region 23, 24, the shift lever 7 according to the invention is also suitable for controlling so-called continuous variable transmissions.

In this way, the capability and versatility of a shift lever 7 designed in this way increase significantly.

In order to always keep the operator 8 informed about the current operational mode and the currently engaged gears 34 and power shift steps 36, furthermore a display unit 49 can be provided in the driver's cabin 3, wherein said display unit 49 displays the following to the driver 8: the partial operating region 37, 38 currently activated by the shift lever 7, and/or the transition from one partial operating region 37 to the next 38, and/or the selected gear-ratio steps 34 and power shift steps 36, and/or the forward/reverse motion region 23, 24.

While in a per se well known manner the gearshift control system 10 is signal-connected with a moving direction selection lever 50 for defining the drive direction, the inventive shift lever 7 can be operated in forward as well as backward drive direction of the utility vehicle 1. It is within the scope of invention that the function of the moving direction election lever 50 can be integrated directly into the shift lever 7. That could be realized in the simplest case in such a manner that the shift lever 7 is dedicated a moving direction selection switch 51 which is operateable in at least two positions.

It is also possible that the shift lever 7 itself is structured is such a manner that the afore-described function of the forward motions region 23 realizes the step up and the backspace function during forward movement and analogously the afore-described reversing region 24 realizes the step up and the backspace function during backward movement.

It is within the scope of an average person skilled in the art to modify the actuating device for controlling a utility vehicle 1 in a way which is not shown or to use it in other machine systems, to achieve the described effects, without thereby leaving the scope of the invention as defined in the appended claims.

### LIST OF REFERENCE CHARACTERS:

- 1: Utility vehicle
- 2: Tractor
- 3: Driver's cabin
- 4: Driver's seat
- 5: Operator console
- 6: Armrest
- 7: Shift lever
- 8: Operator
- 9: Gearshift means
- 10: Gearshift control system
- 11: Transmission
- 12: Engine
- 13: Power transmission device
- 14: Running wheels
- 15: Axle
- 16: Swivel axis
- 17: Vertical plane
- 18: Directional arrows
- 19: Neutral position
- 20: Spring element
- 21: Operating region
- 22: Operating region
- 23: Step up motion region
- 24: Backspace region
- 25: Power shift transmission
- 26: Main clutch
- 27: Transmission input shaft
- 28: Direction of rotation of power take-off
- 29: Reversing module
- 30: Power shift module
- 31: Gearbox
- 32: Crawling speed gear step
- 33: Transmission output shaft
- 34: Gear-ratio step
- 35: Clutch device
- 36: Power shift step
- 37: Partial operating region
- 38: Partial operating region
- 39: Preselection switch
- 40: Control algorithm
- 41: Spring
- 42: End stop
- 43: Contact switch
- 44: Limit switch
- 45: Spring element
- 46: Shift control element
- 47: Spring element
- 48: Switch
- 49: Display unit
- 50: Moving direction election lever
- 51: Moving direction election switch

- S: Position signal
- T: Gearshift signal
- X: Gearshift signal
- Y: Gearshift signal
- Z: Gearshift signal
- Δt: Dwell time interval
- Δts: Dwell time threshold

## Claims

1. Utility vehicle (1, 2) with at least one power shift transmission (11) operable in a number of gear ratio steps (34) and in a number of power shift steps (36) and with an actuating device comprising at least one shift lever (7) operable to control a gearshift control system (10), the gearshift control system (10) being operable to trigger gearshift procedures in the transmission (11), **characterized in that** the shift lever (7) is swivelable from a neutral position (19) to at least two operating regions (21, 22), and wherein the gearshift procedures including shifting of power shift steps (36) and shifting of gear ratio steps (34) on the transmission (11) are coupled to the movement of the shift lever (7) in each operating region (21, 22).

2. The utility vehicle (1, 2) according to claim 1, **characterised in that**
the operating regions (21, 22), of which there are at least two, define the step up motion region (23) and the backspace region (24).

3. The utility vehicle (1, 2) according to one of the preceding claims,
**characterised in that**
the operating regions (21, 22), of which there are at least two, can be traversed by swiveling the shift lever (7) within a single plane (17).

4. The utility vehicle (1, 2) according to any one of the preceding claims,
**characterised in that**
the two operating regions (21, 22), of which there are at least two, are divided into partial operating regions (37, 38), and wherein in each partial operating region (37, 38) different gearshift functions are activated.

5. The utility vehicle (1, 2) according to claim 4, **characterised in that**
the transmission (11) is a power shift transmission (25); **in that** the shift lever (7) causes shifting of the power shift steps (36) of the power shift transmission (25) when it moves through a first partial operating region (37), and causes shifting of the gear ratio steps (34) of the power shift transmission (25) when it moves through a second partial operating region (38).

6. The utility vehicle (1, 2) according to claim 5, **characterised in that**
the partial operating region (37) in which shifting of the power shift steps (36) takes place is directly adjacent to the neutral position (19) of the shift lever (7).

7. The utility vehicle (1, 2) according to any one of the preceding claims,
**characterised in that**
actuating the shift lever (7) either carries out only one gearshift function (34, 36) or a multitude of gearshift functions (34, 36).

8. The utility vehicle (1, 2) according to any of the claims **4 - 6**,
**characterised in that**
at the transition between the partial operating regions (37, 38) of an operating region (21, 22) resistance (41, 42) must be overcome.

9. The utility vehicle (1, 2) according to claim 8, **characterised in that**
in manual mode, shifting the power shift steps (36) in the first partial operating region (37) takes place by touching the resistance (41, 42) which forms the end stop (41, 42) of the first partial operating region (37).

10. The utility vehicle (1, 2) according to claim 8, **characterised in that**
in automatic mode, shifting of the power shift steps (36) in the first partial operating region (37) takes place depending on the dwell time of the shift lever (7) in the first partial operating region (37).

11. The utility vehicle (1, 2) according to claim 7, **characterised in that**
in manual mode, shifting the gear ratio steps (34) in the second partial operating region (38) takes place by touching the resistance (44) which forms the end stop (44) of the second partial operating region (38).

12. The utility vehicle (1, 2) according to claim 7, **characterised in that**
in automatic mode, shifting the gear ratio steps (34) in the second partial operating region (38) takes place depending on the dwell time of the shift lever (7) in the second partial operating region (38).

13. The utility vehicle (1, 2) according to claim 10 or 12, **characterised in that**
the dwell time is defined by a dwell time interval (Δt) which can be preset.

14. The utility vehicle (1, 2) according to any one of the preceding claims,
**characterised in that**
changing the shift lever (7) from automatic mode to manual mode and vice-versa is preselectable by means of a preselection switch (39).

15. The utility vehicle (1, 2) according to any of the
claims 4-14,
**characterised in that**
during transition of the shift lever (7) from the first partial operating region (37) to the second partial operating region (38) of an operating region (21, 22), a change of gear (34) takes place automatically.

16. The utility vehicle (1, 2) according to any of the claims 4-15,
**characterised in that**
for the purpose of disabling the first partial operating region (37) of the operating regions (21, 22) of which there are at least two, a shift control element (46) is associated with the shift lever (7).

17. The utility vehicle (1, 2) according to any of the claims **4-16,**
**characterised in that**
for the purpose of disabling the first partial operating region (37) of the operating regions (21, 22) of which there are at least two, a dwell time threshold (Δts) is associated with the shift lever (7).

18. The utility vehicle (1, 2) *according to any of the claims **4-17,**
**characterised in that**
in each case, the operating regions (21, 22), of which there are at least two, comprise only one partial operating region (37, 38) and **in that** the gearshift function of the further partial operating region (37, 38) is caused by a shift control element (48) integrated in the shift lever (7).

19. The utility vehicle (1, 2) according to claim **18, characterised in that**
the shift control element (48) causes a shift in the gear ratio steps (34) of the power shift transmission (25).

20. The utility vehicle (1, 2) according to any **of the claims 4-20**,
**characterised in that**
the following is displayed to the operator (8): the partial operating region (37 38) currently activated by the shift lever (7), and/or the transition from one partial operating region (37) to the next (38), and/or the selected gear-ratio steps (34) and power shift steps (36), and/or the forward/reverse motion region (23, 24).

21. The utility vehicle (1, 2) according to any one of the preceding claims,
**characterised in that**
the shift lever (7) is held in its neutral position (19) against the action of a spring (20).

22. The utility vehicle (1, 2) according to any one of the preceding claims,
**characterised in that**
the shift lever (7) is integrated in the operator console (5) of the utility vehicle (1, 2).

23. The utility vehicle (1, 2) according to any one of the preceding claims,
**characterised in that**
the shift lever (7) and/or the gearshift control system (10) is associated with a moving direction election element (50,51).

24. The utility vehicle (1, 2) according to any one of the preceding claims,
**characterised in that**
the at least two operating regions (21,22) define the forward driving area and the backward driving area and each of these working areas defines the step up motion region (23) and the backspace motion region (24) at the same time.

## Patentansprüche

1. Nutzfahrzeug (1, 2) mit wenigstens einem Lastschaltgetriebe (11), welches mit einer Anzahl von Übersetzungsstufen (34) und mit einer Anzahl von Lastschaltstufen (36) betreibbar ist, und mit einer Schaltvorrichtung, welche wenigstens einen Schalthebel (7) umfasst, welcher zum Steuern eines Gangschaltsystems (10) betreibbar ist, wobei das Gangschaltsystem (10) betreibbar ist, um Gangschaltvorgänge im Getriebe (11) auszulösen,
**dadurch gekennzeichnet, dass** der Schalthebel (7) von einer neutralen Position (19) in wenigstens zwei Arbeitsbereiche (21, 22) schwenkbar ist und wobei die Gangschaltvorgänge, welche das Schalten der Lastschaltstufen (36) und das Schalten der Übersetzungsstufen (34) am Getriebe (11) umfassen, mit der Bewegung des Schalthebels (7) in jedem Arbeitsbereich (21, 22) gekoppelt sind.

2. Nutzfahrzeug (1, 2) nach Anspruch 1,
**dadurch gekennzeichnet, dass**
die Arbeitsbereiche (21, 22), von denen es mindestens zwei gibt, den Hochschaltbewegungsbereich (23) und den Zurückschaltbewegungsbereich (24) definieren.

3. Nutzfahrzeug (1, 2) nach einem der vorangehenden Ansprüche,
**dadurch gekennzeichnet, dass**
die Arbeitsbereiche (21, 22), von denen es mindestens zwei gibt, durch Schwenken des Schalthebels (7) in einer einzigen Ebene (17) überstrichen werden können.

4. Nutzfahrzeug (1, 2) nach einem beliebigen der vorangehenden Ansprüche,
**dadurch gekennzeichnet, dass**
die Arbeitsbereiche (21, 22), von denen es mindestens zwei gibt, in Teilarbeitsbereiche (37, 38) geteilt sind und wobei in jedem Teilarbeitsbereich (37, 38) unterschiedliche Gangschaltfunktionen aktiviert werden.

5. Nutzfahrzeug (1, 2) nach Anspruch 4,
**dadurch gekennzeichnet, dass**
das Getriebe (11) ein Lastschaltgetriebe (25) ist, in welchem der Schalthebel (7) das Schalten der Lastschaltstufen (36) des Lastschaltgetriebes (25) veranlasst, wenn er sich durch einen ersten Teilarbeitsbereich (37) bewegt, und das Schalten der Übersetzungsstufen (34) des Lastschaltgetriebes (25) veranlasst, wenn er sich durch einen zweiten Teilarbeitsbereich (38) bewegt.

6. Nutzfahrzeug (1, 2) nach Anspruch 5,
**dadurch gekennzeichnet, dass**
der Teilarbeitsbereich (37), in welchem das Schalten der Lastschaltstufen (36) erfolgt, direkt benachbart zur neutralen Position (19) des Schalthebels (7) liegt.

7. Nutzfahrzeug (1, 2) nach einem beliebigen der vorangehenden Ansprüche,
**dadurch gekennzeichnet, dass**
das Betätigen des Schalthebels (7) entweder nur eine Gangschaltfunktion (34, 36) oder eine Mehrzahl an Gangschaltfunktionen (34, 36) ausführt.

8. Nutzfahrzeug (1, 2) nach einem beliebigen der Ansprüche 4-6,
**dadurch gekennzeichnet, dass**
am Übergang zwischen den Teilarbeitsbereichen (37, 38) eines Arbeitsbereichs (21, 22) Widerstand (41, 42) überwunden werden muss.

9. Nutzfahrzeug (1, 2) nach Anspruch 8,
**dadurch gekennzeichnet, dass**
im manuellen Modus das Schalten der Lastschaltstufen (36) im ersten Teilarbeitsbereich (37) durch Berühren des Widerstands (41, 42) stattfindet, welcher den Endanschlag (41, 42) des ersten Teilarbeitsbereichs (37) bildet.

10. Nutzfahrzeug (1, 2) nach Anspruch 8,
**dadurch gekennzeichnet, dass**
im automatischen Modus das Schalten der Lastschaltstufen (36) im ersten Teilarbeitsbereich (37) in Abhängigkeit von der Verweildauer des Schalthebels (7) im ersten Teilarbeitsbereich (37) stattfindet.

11. Nutzfahrzeug (1, 2) nach Anspruch 7,
**dadurch gekennzeichnet, dass**
im manuellen Modus das Schalten der Übersetzungsstufen (34) im zweiten Teilarbeitsbereich (38) durch Berühren des Widerstands (44) stattfindet, welcher den Endanschlag (44) des zweiten Teilarbeitsbereichs (38) bildet.

12. Nutzfahrzeug (1, 2) nach Anspruch 7,
**dadurch gekennzeichnet, dass**
im automatischen Modus das Schalten der Übersetzungsstufen (34) im zweiten Teilarbeitsbereich (38) in Abhängigkeit von der Verweildauer des Schalthebels (7) im zweiten Teilarbeitsbereich (38) stattfindet.

13. Nutzfahrzeug (1, 2) nach Anspruch 10 oder 12,
**dadurch gekennzeichnet, dass**
die Verweildauer durch ein Verweildauerzeitintervall (Δt) definiert ist, welches voreingestellt werden kann.

14. Nutzfahrzeug (1, 2) nach einem beliebigen der vorangehenden Ansprüche,
**dadurch gekennzeichnet, dass**
das Wechseln des Schalthebels (7) vom automatischen Modus in den manuellen Modus und umgekehrt mittels eines Vorauswahlschalters (39) vorauswählbar ist.

15. Nutzfahrzeug (1, 2) nach jedem beliebigen der Ansprüche 4-14,
**dadurch gekennzeichnet, dass**
während des Übergangs des Schalthebels (7) vom ersten Teilarbeitsbereich (37) in den zweiten Teilarbeitsbereich (38) eines Arbeitsbereichs (21, 22) ein Gangwechsel (34) automatisch stattfindet.

16. Nutzfahrzeug (1, 2) nach jedem beliebigen der Ansprüche 4-15,
**dadurch gekennzeichnet, dass**
zum Zwecke des Ausschaltens des ersten Teilarbeitsbereichs (37) der Arbeitsbereiche (21, 22), von denen es wenigstens zwei gibt, dem Schalthebel (7) ein Schaltsteuerelement (46) beigefügt ist.

17. Nutzfahrzeug (1, 2) nach jedem beliebigen der Ansprüche 4-16,
**dadurch gekennzeichnet, dass**
zum Zwecke des Ausschaltens des ersten Teilarbeitsbereichs (37) der Arbeitsbereiche (21, 22), von denen es wenigstens zwei gibt, dem Schalthebel (7) eine Verweilzeitschwelle (Δts) beigefügt ist.

18. Nutzfahrzeug (1, 2) nach jedem beliebigen der Ansprüche 4-17,
**dadurch gekennzeichnet, dass**
in jedem Fall die Arbeitsbereiche (21, 22), von denen es wenigstens zwei gibt, nur einen ersten Teilarbeitsbereich (37, 38) umfassen und dass die Gangschaltfunktion des weiteren Teilarbeitsbereichs (37, 38) durch ein Schaltsteuerelement (48), welches im Schalthebel (7) integriert ist, veranlasst wird.

19. Nutzfahrzeug (1, 2) nach Anspruch 18,
**dadurch gekennzeichnet, dass**
das Schaltsteuerelement (48) ein Schalten in den Übersetzungsstufen (34) des Lastschaltgetriebes (25) veranlasst.

20. Nutzfahrzeug (1, 2) nach jedem beliebigen der Ansprüche 4-19,
**dadurch gekennzeichnet, dass**
das Folgende dem Fahrer (8) angezeigt wird: der Teilarbeitsbereich (37, 38), welcher gerade durch den Schalthebel (7) aktiviert ist, und/oder der Übergang von einem Teilarbeitsbereich (37) auf den nächsten (38) und/oder die ausgewählten Übersetzungsstufen (34) und die Lastschaltstufen (36) und/oder der Hochschalt/Zurückschalt-Bewegungsbereich (23, 24).

21. Nutzfahrzeug (1, 2) nach jedem beliebigen der vorangehenden Ansprüche,
**dadurch gekennzeichnet, dass**
der Schalthebel (7) in seiner neutralen Position (19) gegen die Wirkung einer Feder (20) gehalten wird.

22. Nutzfahrzeug (1, 2) nach jedem beliebigen der vorangehenden Ansprüche,
**dadurch gekennzeichnet, dass**
der Schalthebel (7) in der Bedienungskonsole (5) des Nutzfahrzeugs (1, 2) integriert ist.

23. Nutzfahrzeug (1, 2) nach jedem beliebigen der vorangehenden Ansprüche,
**dadurch gekennzeichnet, dass**
der Schalthebel (7) und/oder das Gangschaltsystem (10) mit einem Bewegungsrichtungsauswahlelement (50, 51) ausgestattet ist.

24. Nutzfahrzeug (1, 2) nach jedem beliebigen der vorangehenden Ansprüche,
**dadurch gekennzeichnet, dass**
die wenigstens zwei Arbeitsbereiche (21, 22) den Vorwärtsfahrbereich und den Rückwärtsfahrbereich definieren und dass jeder dieser Arbeitsbereiche den Hochschaltbereich (23) und den Zurückschaltbereich (24) gleichzeitig definiert.

## Revendications

1. Véhicule utilitaire (1, 2) doté d'au moins une boîte de vitesses commandée en charge (11), pouvant fonctionner dans une pluralité de rapports de vitesse (34) et dans une pluralité de rapports sous charge (36), et d'un dispositif d'actionnement comprenant au moins un levier de changement de vitesse (7) utilisable pour commander une commande de changement de vitesse (10), laquelle commande de changement de vitesse (10) est utilisable pour déclencher des opérations de changement de vitesse dans la boîte de vitesses (11), **caractérisé en ce que** le levier de changement de vitesse (7) peut être basculé d'une position neutre (19) vers au moins deux zones de fonctionnement (21, 22), et **en ce que** les opérations de changement de vitesse comprenant le changement de rapports sous charge (36) et le changement de rapports de vitesse (34) sur la boîte de vitesses (11) sont couplées au mouvement du levier de changement de vitesse (7) dans chaque zone de fonctionnement (21, 22).

2. Véhicule utilitaire (1, 2) selon la revendication 1, **caractérisé en ce que** lesdites au moins deux zones de fonctionnement (21, 22) définissent la zone de montée des rapports (23) et la zone de descente des rapports (24).

3. Véhicule utilitaire (1, 2) selon une des revendications précédentes, **caractérisé en ce que** lesdites au moins deux zones de fonctionnement (21, 22) peuvent être parcourues en basculant le levier de changement de vitesse (7) dans un seul plan (17).

4. Véhicule utilitaire (1, 2) selon une quelconque des revendications précédentes, **caractérisé en ce que** lesdites au moins deux zones de fonctionnement (21, 22) sont divisées en zones partielles de fonctionnement (37, 38), différentes fonctions de changement de vitesse étant activées dans chaque zone partielle de fonctionnement (37, 38).

5. Véhicule utilitaire (1, 2) selon la revendication 4, **caractérisé en ce que** la boîte de vitesses (11) est une boîte de vitesses commandée en charge (25), le levier de changement de vitesse (7) entraînant le changement des rapports sous charge (36) de la boîte de vitesses commandée en charge (25) quand il parcourt une première zone partielle de fonctionnement (37), et le changement des rapports de vitesse (34) de la boîte de vitesses commandée en charge (25) quand il parcourt une deuxième zone partielle de fonctionnement (38).

6. Véhicule utilitaire (1, 2) selon la revendication 5, **caractérisé en ce que** la zone partielle de fonctionnement (37) dans laquelle a lieu le changement des rapports sous charge (36) est directement adjacente à la position neutre (19) du levier de changement de vitesse (7).

7. Véhicule utilitaire (1, 2) selon une quelconque des revendications précédentes, **caractérisé en ce que** l'actionnement du levier de changement de vitesse (7) déclenche soit une seule fonction de changement de vitesse (34, 36), soit une pluralité de fonctions de changement de vitesse (34, 36).

8. Véhicule utilitaire (1, 2) selon une quelconque des revendications 4 à 6, **caractérisé en ce qu'**une résistance (41, 42) doit être surmontée à la transition entre les zones partielles de fonctionnement (37, 38) d'une zone de fonctionnement (21, 22).

9. Véhicule utilitaire (1, 2) selon la revendication 8, **caractérisé en ce que**, en mode manuel, le changement des rapports sous charge (36) dans la première zone partielle de fonctionnement (37) se fait en touchant la résistance (41, 42) qui forme la butée (41, 42) de la première zone partielle de fonctionnement (37).

10. Véhicule utilitaire (1, 2) selon la revendication 8, **caractérisé en ce que**, en mode automatique, le changement des rapports sous charge (36) dans la première zone partielle de fonctionnement (37) se fait en fonction du temps de séjour du levier de changement de vitesse (7) dans la première zone partielle de fonctionnement (37).

11. Véhicule utilitaire (1, 2) selon la revendication 7, **caractérisé en ce que**, en mode manuel, le changement des rapports de vitesse (34) dans la deuxième zone partielle de fonctionnement (38) se fait en touchant la résistance (44) qui forme la butée (44) de la deuxième zone partielle de fonctionnement (38).

12. Véhicule utilitaire (1, 2) selon la revendication 7, **caractérisé en ce que**, en mode automatique, le changement des rapports de vitesse (34) dans la deuxième zone partielle de fonctionnement (38) se fait en fonction du temps de séjour du levier de changement de vitesse (7) dans la deuxième zone partielle de fonctionnement (38).

13. Véhicule utilitaire (1, 2) selon la revendication 10 ou 12, **caractérisé en ce que** le temps de séjour est défini par un intervalle de temps de séjour (Δt) qui peut être préréglé.

14. Véhicule utilitaire (1, 2) selon une quelconque des revendications précédentes, **caractérisé en ce que** le passage du levier de changement de vitesse (7) de mode automatique en mode manuel et vice-versa peut être présélectionné au moyen d'un commutateur de présélection (39).

15. Véhicule utilitaire (1, 2) selon une quelconque des revendications 4 à 14, **caractérisé en ce qu'**un changement de vitesse (34) est effectué automatiquement pendant la transition du levier de changement de vitesse (7) de la première zone partielle de fonctionnement (37) à la deuxième zone partielle de fonctionnement (38) d'une zone de fonctionnement (21, 22).

16. Véhicule utilitaire (1, 2) selon une quelconque des revendications 4 à 15, **caractérisé en ce qu'**un élément de changement de vitesse (46) est associé au levier de changement de vitesse (7) pour la mise hors service de la première zone partielle de fonctionnement (37) desdites au moins deux zones de fonctionnement (21, 22).

17. Véhicule utilitaire (1, 2) selon une quelconque des revendications 4 à 16, **caractérisé en ce qu'**un seuil de temps de séjour (Δts) est associé au levier de changement de vitesse (7) pour la mise hors service de la première zone partielle de fonctionnement (37) desdites au moins deux zones de fonctionnement (21, 22).

18. Véhicule utilitaire (1, 2) selon une quelconque des revendications 4 à 17, **caractérisé en ce que** chacune desdites au moins deux zones de fonctionnement (21, 22) comprend seulement une zone partielle de fonctionnement (37, 38), et la fonction de changement de vitesse de l'autre zone partielle de fonctionnement (37, 38) est exécutée par un élément de changement de vitesse (48) intégré dans le levier de changement de vitesse (7).

19. Véhicule utilitaire (1, 2) selon la revendication 18, **caractérisé en ce que** l'élément de changement de vitesse (48) provoque le changement des rapports de vitesse (34) de la boîte de vitesses commandée en charge (25).

20. Véhicule utilitaire (1, 2) selon une quelconque des revendications 4 à 19, **caractérisé en ce que** la zone partielle de fonctionnement (37, 38) en cours d'activation par le levier de changement de vitesse (7) et/ou la transition d'une zone partielle de fonctionnement (37) à la suivante (38) et/ou les rapports de vitesse (34) et rapports sous charge (36) sélectionnés et/ou la zone de montée/descente des rapports (23, 24) sont affichés à l'opérateur (8).

21. Véhicule utilitaire (1, 2) selon une quelconque des revendications précédentes, **caractérisé en ce que** le levier de changement de vitesse (7) est maintenu dans sa position neutre (19) à l'encontre de l'action d'un ressort (20).

22. Véhicule utilitaire (1, 2) selon une quelconque des revendications précédentes, **caractérisé en ce que** le levier de changement de vitesse (7) est intégré dans la console de commande (5) du véhicule utilitaire (1, 2).

23. Véhicule utilitaire (1, 2) selon une quelconque des revendications précédentes, **caractérisé en ce que** le levier de changement de vitesse (7) et/ou la commande de changement de vitesse (10) sont associés à un élément de sélection du sens de marche (50, 51).

24. Véhicule utilitaire (1, 2) selon une quelconque des revendications précédentes, **caractérisé en ce que** lesdites au moins deux zones de fonctionnement (21,22) définissent la zone de marche avant et la zone de marche arrière, chacune de ces zones de fonctionnement définissant en même temps la zone de montée des rapports (23) et la zone de descente des rapports (24).
